# DEMANDE DE BREVET EUROPEEN

(11) **EP 4 527 894 A2**
(43) Date de publication de la demande: **26.03.2025**
(21) Numéro de dépôt: 24207846.7
(22) Date de dépôt: 16.03.2017
(51) Int. Cl.: C08L 77/02

(54) **COMPOSITIONS RIGIDES ET DUCTILES A FROID A BASE DE POLYAMIDE POUR LA PRÉPARATION D'ARTICLES DE SPORT OBTENUS PAR INJECTION**

(30) Priorité: 18.03.2016 FR 1652298
(62) Demande divisionnaire de: 17717777.1
(71) Demandeur: ARKEMA FRANCE, 92700 Colombes (FR)
(72) Inventeur: SABARD, Mathieu, 27470 SERQUIGNY (FR); CIPRIANI, Régis, 27470 SERQUIGNY (FR); LOYEN, Karine, 27470 SERQUIGNY (FR); CHEMINET, Helena, 92700 COLOMBES (FR); EUSTACHE, Rene-Paul, 27470 SERQUIGNY (FR)
(74) Mandataire: Arkema Patent

(57) **Abrégé**

Composition comprenant, en poids, le total étant égal à100 % :
(A) 65 à 95%, notamment de 65 à 93%, en particulier de 65 à 90% d'un mélange de polyamide comprenant de:
• 10 à 90% en poids d'au moins un polyamide semi-cristallin dont le nombre moyen d'atomes de carbone par rapport à l'atome d'azote est supérieur à 9,
• 90 à 10% en poids d'au moins un polyamide amorphe,

(B) 5 à 30%, notamment de 7 à 30%, en particulier de plus de 10 à 30% d'au moins un modifiant choc ou d'au moins un core-shell ou d'un mélange de ceux-ci
(C) 0 à 5%, en particulier de 0,1 à 5%, d'au moins un additif choisi parmi les stabilisants, les colorants, les plastifiants, les fibres, les charges, les processing aids ou un mélange de ceux-ci,

ledit polyamide amorphe étant en proportion suffisante pour que la composition soit suffisamment ductile à basse température, et rigide, et présente notamment une T_{DF} < 0°C telle que déterminée selon la norme ISO 179 1eA et un module de flexion supérieur à 900 MPa tel que déterminé selon la norme ISO 178 :2010, et ladite composition étant dépourvue de PEBA,
pour la fabrication notamment d'un article de sport ou d'optique.

## Description

La présente invention concerne des compositions rigides et ductiles à froid, à base de polyamide, pour la préparation d'articles de sport obtenus par injection présentant un compromis intéressant de rigidité, de ductilité, de résistance à la fatigue, d'injectabilité ainsi que des propriétés de thermoformage, et leurs utilisations.

La présente invention concerne également un procédé de préparation desdites compositions ainsi que les objets fabriqués avec lesdites compositions telles que des fibres, tissus, films, feuilles, joncs, tubes, pièces injectées, notamment des articles de sport notamment une chaussure de ski ou une partie de chaussure de ski ou une chaussure rigide à crampon, telle que chaussure de soccer, de rugby ou de football américain, une chaussure de hockey ou une partie de chaussure de hockey, ou une chaussure de running, une balle de golf ou une partie de balle de golf, ou une crosse dans le sport lacrosse ou encore un article de hockey tel qu'un casque.... ou des articles de sport pour la protection de la tête, des épaules, des coudes, des mains, des genoux, du dos ou du tibia, tels que casque, gants, épaulettes, coudières, genouillères ou protèges tibia dans tout type de sport où les participants sont sujets à de forts impact, ou encore des articles d'optique, en particulier des lunettes ou un masque, notamment des lunettes ou un masque utilisées dans la pratique d'un sport telles que des lunettes de protection ou un masque de ski.

Les fabricants d'articles de sport sont confrontés à plusieurs défis.

Les articles doivent évoluer vers plus de légèreté afin de diminuer au maximum l'énergie dépensée lors de leur utilisation.

Ils doivent également permettre au sportif d'obtenir les sensations nécessaires au contrôle des mouvements et transmettre rapidement les impulsions musculaires.

La rigidité d'une pièce est directement liée au module élastique du matériau constitutif de cette pièce et au cube de l'épaisseur des parois.

Un matériau de module élevé permet de diminuer les épaisseurs des pièces donc de gagner beaucoup sur le poids de celles-ci tout en gardant la rigidité nécessaire à un bon retour élastique indispensable au sportif.

Dans de nombreux articles de sport, il faut également garantir une bonne résistance à l'impact (choc à froid sur une chaussure de ski par exemple) et également une bonne résistance à des sollicitations répétées (pliage de la semelle d'une chaussure de football, épaulettes, coudière, genouillères ou protège tibia, par exemple).

Les articles, notamment les chaussures de ski doivent également présenter des propriétés de thermoformage de manière à pouvoir adapter parfaitement la chaussure, en particulier le bout de la chaussure, au pied.

De la même manière, la combinaison rigidité, résistance au choc et thermoformabilité des compositions de l'invention est intéressante pour les applications optiques. La composition de l'invention offre en particulier la possibilité d'ajuster la forme de la monture des lunettes ou d'un masque à la morphologie du visage (oreilles, nez, ...) après chauffage pour augmenter la sécurité et le confort lors de l'utilisation.

Par ailleurs, les articles doivent pouvoir être injectés facilement et permettre l'obtention de pièces présentant un aspect irréprochable et une aptitude à la coloration dans des couleurs variées.

La demande internationale WO 2014/037647 décrit une composition transparente comprenant un copolyamide de formule générale suivante A/X.Y, le motif X représentant un motif diamine alicyclique, ladite composition étant utilisée pour la fabrication d'un article moulé transparent, tel qu'une semelle de chaussure ou un élément de semelle de chaussure, en particulier d'une chaussure de sport.

La demande internationale WO 09/153534 décrit notamment une composition comprenant un polyamide amorphe, un polyamide semi-cristallin et un élastomère pour la fabrication d'objets divers tels que les montures de lunettes, des lentilles ou des verres de lunettes, des équipements électriques, électroniques ou automobiles, du matériel chirurgical, de l'emballage ou encore des articles de sport.

La demande US 2011105697 décrit une composition de moulage transparente comprenant un polyamide amorphe, un polyamide semi-cristallin et un élastomère en proportion de 0 à 10% pour la fabrication d'articles transparents pour la fabrication d'articles de sport.

Le brevet EP 1227131 décrit une composition transparente comprenant un polyamide amorphe, un polyamide semi-cristallin et un modifiant souple pour la décoration de dessus de ski.

Cependant, aucune de ces compositions ne permet d'obtenir un compromis entre la rigidité à température ambiante, la ductibilité à basse température, une résistance à la fatigue.

L'invention consiste en la mise au point de mélanges de polyamides amorphe, de polyamides semi-cristallins et de modifiant choc présentant un compromis de rigidité, de choc et de résistance à la flexion alternée et ayant une fluidité optimisée pour l'injection d'articles de sport et des propriétés de thermoformage.

La demanderesse à ainsi découvert de façon surprenante que la sélection d'une gamme particulière de polyamide amorphe, d'une gamme particulière de polyamide semi-cristallin et d'une gamme particulière de modifiant choc permettait la préparation de compositions présentant un bon compromis entre le niveau choc, la rigidité, la processabilité pour l'injection de pièces fines et présentant d'excellentes propriétés de thermoformage, notamment destinées à la fabrication d'articles de sport.

La présente invention concerne une composition comprenant, en poids, le total étant égal à100 % :
(A) 65 à 95%, notamment de 65 à 93%, en particulier de 65 à 90% d'un mélange de polyamide comprenant de:
   - 10 à 90% en poids d'au moins un polyamide semi-cristallin dont le nombre moyen d'atomes de carbone par rapport à l'atome d'azote est supérieur à 9, ledit polyamide semi-cristallin étant de formule A/Z dans laquelle,
      - A est un motif répétitif aliphatique choisi parmi un motif obtenu à partir de la polycondensation d'au moins un aminoacide, un motif obtenu à partir de la polycondensation d'au moins un lactame et un motif X.Y obtenu à partir de la polycondensation :
      - d'au moins une diamine, ladite diamine étant une diamine aliphatique linéaire ou ramifiée, ou un mélange de celles-ci, et
      - d'au moins un diacide carboxylique, ledit diacide étant un diacide aliphatique linéaire ou ramifié, ladite diamine et ledit diacide comprenant de 4 à 36 atomes de carbone, avantageusement de 6 à 18 atomes de carbone, et
      - Z représente un autre motif répétitif aliphatique ou XY différent de A et est compris de 0 à 20%;
   - 90 à 10% en poids d'au moins un polyamide amorphe,
(B) 5 à 30%, notamment de 7 à 30%, en particulier de plus de 10 à 30% d'au moins un modifiant choc ou d'au moins un core-shell ou d'un mélange de ceux-ci
(C) 0 à 5%, en particulier de 0,1 à 5%, d'au moins un additif choisi parmi les stabilisants, les colorants, les plastifiants, les fibres, les charges, les processing aids ou un mélange de ceux-ci,
   ledit polyamide amorphe étant en proportion suffisante pour que la composition soit suffisamment ductile à basse température, et rigide, et présente notamment une T_{DF} < 0°C telle que déterminée selon la norme ISO 179 1eA et un module de flexion supérieur à 900 MPa tel que déterminé selon la norme ISO 178 :2010, et ladite composition étant dépourvue de PEBA.
   pour la fabrication notamment d'un article de sport ou d'optique.
   La T_{DF} est à la température de transition Ductile-Fragile qui correspond à la température à laquelle un matériau passe d'un comportement ductile (casse partielle du matériau) à un comportement fragile (rupture complète du matériau). La transition ductile-fragile peut donc être vue comme un domaine de température où il y a 50% de rupture fragile (comportement fragile de l'échantillon) et 50% de rupture partielle (comportement ductile de l'échantillon) et une compétition entre comportement ductile et comportement fragile.
   Le choc Charpy effectué selon la norme ISO 179 1eA permet d'obtenir la résilience.
   La transition ductile-fragile (T_{DF}) correspond donc au point d'inflexion de la courbe résilience en fonction de la température (voir figures).

Le module de flexion est déterminé après conditionnement 15 jours à 23°C avec une humidité relative de 50%.

Dans toute la description, tous les pourcentages de (A), (B) et (C) sont indiqués en poids.

Dans toute la description, les bornes des gammes de valeurs présentées sont incluses.

Un autre avantage de la composition de l'invention est que le module élastique, déterminé en DMA (Dynamical Mechanical Analysis) selon la norme ISO 6721-4 :2008, reste stable entre -40°C et +30°C, c'est à dire que le rapport module élastique à 30°C / module élastique à -40°C < 1.3. La plage -40°C et +30°C correspond à la plage de température des différentes utilisations de la composition de l'invention.

Un polyamide amorphe, au sens de l'invention, désigne un polyamide transparent amorphe présentant seulement une température de transition vitreuse (pas de température de fusion (Tf)), ou un polyamide très peu cristallin ayant une température de transition vitreuse et un point de fusion tel que l'enthalpie de cristallisation lors de l'étape de refroidissement à une vitesse de 20K/min en analyse calorimétrique différentielle (« Differential Scanning Calorimetry » DSC en anglais) mesurée selon la norme ISO 11357-3 :2013 est inférieure à 30 J/g, notamment inférieure à 20 J/g, de préférence inférieure à 15 J/g. La température de transition vitreuse (Tg) mesurée par DSC à une vitesse de chauffe de 20K/min selon la norme ISO 11357-1 :2009 et ISO 11357-2 :2013 pour ces polyamides est supérieure à 75°C.

Un polyamide semi-cristallin, au sens de l'invention, désigne un polyamide qui présente une température de fusion (Tf) en DSC selon la norme ISO 11357-3 :2013, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

Le terme "polyamide" employé dans la présente description couvre aussi bien les homopolyamides que les copolyamides.

Le terme « ductile » désigne la capacité d'un matériau à se déformer plastiquement sans se rompre.

Avantageusement, la composition de l'invention est une composition thermoformable.

### S'agissant du constituant (A) :

### Polyamide semi-cristallin :

Le nombre moyen d'atome de carbone par rapport à l'atome d'azote est supérieur à 9.

Avantageusement, il est supérieur à 10.

Dans le cas d'un homopolyamide de type PA-X.Y, le nombre d'atomes de carbone par atome d'azote est la moyenne du motif X et du motif Y.

Dans le cas d'un copolyamide, le nombre de carbone par azote se calcule selon le même principe. Le calcul est réalisé au prorata molaire des différents motifs amides.

### A : motif répétitif aliphatique

Dans une première variante de l'invention, le motif répétitif aliphatique A est obtenu à partir de la polycondensation d'un acide aminocarboxylique comprenant de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante de l'invention, le motif répétitif aliphatique A est obtenu à partir de la polycondensation d'un lactame comprenant de 9 à 12 atomes de carbone. Il peut ainsi être choisi parmi le décanolactame (noté 10), l'undécanolactame (noté 11) et le laurolactame ou lauryllactame (noté 12), avantageusement le lactame est le l'undécanolactame.

De manière plus particulièrement préférée, le motif répétitif A est obtenu à partir d'un seul acide aminocarboxylique ou d'un seul lactame.

Toutefois, on peut tout à fait envisager de mettre en oeuvre, pour l'obtention de ce même motif A, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

### A : motif répétitif X.Y

Le motif répétitif X.Y est un motif obtenu à partir de la polycondensation d'au moins une diamine aliphatique linéaire ou ramifiée ou d'un mélange de deux ou plusieurs de celles-ci et d'au moins un diacide carboxylique aliphatique.

Les proportions molaires en diamine et en diacide carboxylique sont préférentiellement stoechiométriques.

La diamine ainsi que le diacide carboxylique comprennent chacun de 4 à 36 atomes de carbone et, avantageusement, de 6 à 18 atomes de carbone.

La diamine aliphatique utilisée pour l'obtention de ce motif répétitif X.Y est une diamine aliphatique qui présente une chaine principale linéaire comprenant au moins 4 atomes de carbone.

Cette chaine principale linéaire peut, le cas échéant, comporter un ou plusieurs substituant méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituant méthyle et/ou éthyle sur la chaine principale, la diamine aliphatique utilisée pour l'obtention de ce motif répétitif X.Y comprend de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule H₂N-(CH₂)ₓ-NH₂ et peut être choisie par exemple parmi la butanediamine, la pentanediamine, l'hexanediamine, l'heptanediamine, l'octanediamine, la nonane-diamine, la décanediamine, l'undécanediamine, la dodécanediamine, la tridécanediamine, la tétradécanediamine, l'hexadécanediamine, l'octadécanedia-mine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine,.

Le diacide carboxylique peut être choisi parmi les diacides carboxyliques aliphatiques, linéaires ou ramifiés.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

A titre d'exemple, les motifs X.Y sont choisis parmi le polydécaméthylène dodécanamide (PA-10.12); le polydécaméthylène sébaçanamide (PA-10.10) et le polydodecaméthylène dodécanamide (PA-12.12), avantageusement le motif X.Y représente le polydécaméthylène sébaçanamide (PA-10.10).

### Z : autre polyamide

Z désigne un autre polyamide et peut correspondre à un motif répétitif aliphatique ou un motif X.Y tel que défini ci-dessus, à condition d'être différent de A.

La proportion de Z présente est de 0 à 20% en poids par rapport à la somme A + Z, en particulier de 0,1 à 20%.

### Polyamide amorphe :

Le polyamide amorphe peut être un homopolyamide ou un copolyamide. Les polyamides amorphes sont choisis parmi les polyamides aliphatiques, cycloaliphatiques et aromatiques ou un mélange de ceux-ci.

Notamment, le polyamide amorphe (ou lorsque la composition comprend un mélange de polyamides amorphes, au moins l'un des polyamides amorphes, voire même chacun des polyamides amorphes) comprend au moins un motif répondant à la formule diamine en Ca.diamine en Cb.

Le motif répétitif diamine en Ca.diamine en Cb est un motif obtenu à partir de la polycondensation d'au moins une diamine aliphatique linéaire ou ramifiée, ou d'au moins une diamine cycloaliphatique ou d'au moins une diamine aromatique ou d'un mélange de deux ou plusieurs de celles-ci et d'au moins un diacide carboxylique aliphatique ou d'au moins un diacide carboxylique cycloaliphatique ou d'au moins un diacide carboxylique aromatique.

Les proportions molaires en diamine et en diacide carboxylique sont préférentiellement stoechiométriques.

La diamine ainsi que le diacide carboxylique comprennent chacun de 4 à 36 atomes de carbone et, avantageusement, de 6 à 18 atomes de carbone.

La diamine aliphatique utilisée pour l'obtention de ce motif répétitif diamine en Ca.diacide en Cb est telle que définie ci-dessus pour la diamine X.

La diamine cycloaliphatique peut être choisie par exemple parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3'-diméthyl-4,4'-diamino-dicyclohexyl-méthane couramment dénommé "BMACM" ou "MACM" (et noté B ci-après), le p-bis(aminocyclohexyl)-méthane couramment dénommé "PACM" (et noté P ci-après), l'isopropylidènedi(cyclohexylamine) couramment dénommé "PACP", l'isophorone-diamine (notée IPD ci-après) et le 2,6-bis(amino méthyl)norbornane couramment dénommé "BAMN".

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

La diamine aromatique peut être choisie parmi la 1,3-xylylène diamine et la 1,4-xylylène diamine.

Le diacide carboxylique peut être choisi parmi les diacides carboxyliques aliphatiques, linéaires ou ramifiés, les diacides carboxyliques cycloaliphatiques et les diacides carboxyliques aromatiques.

Lorsque l'acide dicarboxylique est aliphatique et linéaire, il est tel que défini ci-dessus pour le diacide Y.

Lorsque le diacide carboxylique est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclo-hexyl)propane.

Lorsque le diacide carboxylique est aromatique, il peut être choisi parmi l'acide téréphtalique (noté T), l'acide isophtalique (noté I) et un acide naphtalénique.

### S'agissant de (B) :

### S'agissant du modifiant choc

Le modifiant choc est, avantageusement constitué par un polymère présentant un module de flexion inférieur à 100 MPa mesuré selon la norme ISO 178 et de Tg inférieure à 0°C (mesurée selon la norme 11357-2 au niveau du point d'inflexion du thermogramme DSC), en particulier une polyoléfine.

La polyoléfine du modifiant choc peut être fonctionnalisée ou non fonctionnalisée ou être un mélange d'au moins une fonctionnalisée et/ou d'au moins une non fonctionnalisée. Pour simplifier on a désigné la polyoléfine par (B) et on a décrit ci- dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle ;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader^{®} de la Demanderesse ou des polyoléfines greffées par de l'anhydride maléique comme les Orevac^{®} de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI du polyamide, les MFI de (B1) et (B2) peuvent être choisis dans une large plage il est cependant recommandé pour faciliter la dispersion de (B) que le MFI du polyamide soit plus grand que celui de (B).

### S'agissant du core-shell

Le core-shell est de préférence sous la forme de particules polymères sphériques. Ces particules sont également nommées particules coeur-écorce ou polymères coeur-écorce. La première couche forme le coeur, la deuxième ou toutes les couches suivantes forment les écorces respectives.

En ce qui concerne la particule polymère sphérique, elle présente une taille de particule moyenne en poids comprise entre 20 nm et 500 nm. De préférence, la taille de particule moyenne en poids du polymère est comprise entre 20 nm et 400 nm, de manière davantage préférée entre 20 nm et 350 nm et avantageusement entre 20 nm et 300 nm.

La particule polymérique a une structure multicouche comprenant au moins une couche (A) comprenant un polymère (A1) ayant une température de transition vitreuse inférieure à 0 °C et une autre couche (B) comprenant un polymère (B1) ayant une température de transition vitreuse supérieure à 60 °C.

De préférence, le polymère (B1) ayant une température de transition vitreuse supérieure à 60 °C est la couche externe de la particule polymérique à structure multicouche.

La particule polymérique est obtenue par un procédé à plusieurs étapes, tel qu'à deux ou trois étapes ou plus.

De préférence, le polymère (A1) ayant une température de transition vitreuse inférieure à 0 °C dans la couche (A) est fabriqué lors de la première étape du procédé à plusieurs étapes formant le noyau de la particule polymère à structure multicouche. De préférence, le polymère (A1) a une température de transition vitreuse inférieure à -5 °C, de manière davantage préférée inférieure à -15 °C, avantageusement inférieure à -25 °C.

De préférence, le polymère (B1) ayant une température de transition vitreuse supérieure à 60 °C est fabriqué lors de la dernière étape du procédé à plusieurs étapes formant la couche externe de la particule polymérique à structure multicouche.

Une ou plusieurs couches intermédiaires supplémentaires obtenues par une ou plusieurs étapes intermédiaires peuvent être présentes.

La température de transition vitreuse Tg du polymère à plusieurs couches peut être estimée par exemple par des méthodes dynamiques telles que l'analyse thermomécanique.

Le polymère (A1) et la couche (A) comprennent de 0 % en poids à moins de 50 % en poids de monomères contenant des groupes aromatiques. Le polymère (B1) et la couche (B) comprennent de 0 % en poids à moins de 50 % en poids de monomères contenant des groupes aromatiques.

Selon un mode de réalisation, le polymère (B1) et la couche (B) ne comprennent pas de monomères contenant des groupes aromatiques.

En ce qui concerne le polymère (A1) ayant une température de transition vitreuse inférieure à 0 °C, il comprend au moins 50 % en poids d'unités polymériques issues d'isoprène ou de butadiène et la couche (A) est la couche la plus intérieure de la particule polymérique à structure multicouche. En d'autres termes, la couche (A) comprenant le polymère (A1) est le noyau de la particule polymérique.

À titre d'exemple, le polymère (A1) du noyau peut être constitué d'homopolymères d'isoprène ou d'homopolymères de butadiène, de copolymères d'isoprène-butadiène, de copolymères d'isoprène avec au plus 98 % en poids d'un monomère vinylique et de copolymères de butadiène avec au plus 98 % en poids d'un monomère vinylique. Le monomère vinylique peut être le styrène, un alkylstyrène, l'acrylonitrile, un (méth)acrylate d'alkyle ou le butadiène ou l'isoprène ou leurs mélanges, dans la mesure où le polymère (A1) comprend moins de 50 % en poids de monomères contenant des groupes aromatiques.

Le polymère (A1) peut être réticulé. Des monomères réticulants utiles dans la présente invention comprennent, sans y être limités, les composés vinyliques polyfonctionnels aromatiques tels que le divinylbenzène et le divinyltoluène, les alcools polyhydriques tels que le diméthacrylate d'éthylène glycol et le diacrylate de 1,3-butanediol, les triméthacrylates, les triacrylates, les carboxylates d'allyle tels que l'acrylate d'allyle et le méthacrylate d'allyle, et les composés di- et tri-allyliques tels que le phtalate de diallyle, le sébacate de diallyle et la triallyltriazine.

Selon un mode de réalisation, le noyau est un homopolymère de butadiène.

Selon un autre mode de réalisation, le noyau est un copolymère de butadiène-styrène.

De manière davantage préférée, la température de transition vitreuse Tg du polymère (A1) comprenant au moins 50 % en poids d'unités polymériques issues d'isoprène ou de butadiène est comprise entre -100 °C et 10 °C, de manière encore davantage préférée entre -80 °C et 0 °C et avantageusement entre -70 °C et -20 °C.

En ce qui concerne le polymère (B1), on peut mentionner les homopolymères et les copolymères comprenant des monomères contenant des doubles liaisons et/ou des monomères vinyliques. De préférence, le polymère (B1) est un polymère (méth)acrylique.

De préférence, le polymère (B1) comprend au moins 70 % en poids de monomères choisis parmi les (méth)acrylates d'alkyle en C1 à C12. De manière encore davantage préférée, le polymère (B1) comprend au moins 80 % en poids de monomères de méthacrylate d'alkyle en C1 à C4 et/ou de monomères d'acrylate d'alkyle en C1 à C8.

De la manière préférée entre toutes, les monomères acryliques ou méthacryliques du polymère (B1) sont choisis parmi l'acrylate de méthyle, l'acrylate d'éthyle, l'acrylate de butyle, le méthacrylate de méthyle, le méthacrylate d'éthyle, le méthacrylate de butyle et leurs mélanges, dans la mesure où le polymère (B1) a une température de transition vitreuse d'au moins 60 °C.

Le polymère (B1) peut comprendre des monomères fonctionnels choisis parmi le (méth)acrylate de glycidyle, l'acide acrylique ou méthacrylique, les amides dérivés de ces acides, tels que par exemple le diméthylacrylamide, l'acrylate ou le méthacrylate de 2-méthoxyéthyle, les acrylates ou méthacrylates de 2-aminoéthyle et leurs mélanges.

Avantageusement, le polymère (B1) comprend au moins 70 % en poids d'unités monomères issues de méthacrylate de méthyle.

De préférence, la température de transition vitreuse Tg du polymère (B1) est comprise entre 60 °C et 150 °C. La température de transition vitreuse du polymère (B1) est de manière davantage préférée comprise entre 80 °C et 150 °C, avantageusement entre 90 °C et 150 °C et plus avantageusement entre 100 °C et 150 °C.

De préférence, le polymère (B1) est greffé sur le polymère fabriqué à l'étape précédente.

Selon certains modes de réalisation, le polymère (B1) est réticulé.

Le core-shell peut-être obtenu par un procédé à plusieurs étapes comprenant au moins deux étapes. Un tel procédé est décrit par exemple dans les documents US2009/0149600 ou EP0722961.

De préférence, le polymère (A1) ayant une température de transition vitreuse inférieure à 0 °C fabriqué pendant l'étape (A) est la première étape du procédé à plusieurs étapes.

Le rapport en poids ra du polymère (A1) de la couche comprise dans l'étape (A) par rapport au polymère à plusieurs couches complet est d'au moins 60 % en poids, de préférence d'au moins 70 % en poids, de manière davantage préférée d'au moins 75 % en poids.

Le rapport en poids rb du polymère (B1) de la couche externe comprise dans l'étape (B) par rapport au polymère à plusieurs couches complet est d'au moins 5 % en poids, de préférence d'au moins 6 % en poids, de manière davantage préférée d'au moins 7 % en poids.

Selon l'invention, le rapport rb entre la couche externe (B) comprenant le polymère (B1) et le polymère à plusieurs couches complet est d'au plus 30 % en poids.

De préférence, le rapport entre le polymère (B1) et le polymère à plusieurs couches complet est compris entre 5 % en poids et 30 % en poids.

### S'agissant de (C) :

L'additif est choisi parmi les stabilisants, les colorants, les plastifiants, les fibres, les charges, les processing aids ou un mélange de ceux-ci,

A titre d'exemple, le stabilisant peut être un stabilisant UV, un stabilisant organique ou plus généralement une combinaison de stabilisants organiques, tel un antioxydant de type phénol (par exemple du type de celle de l'irganox 245 ou 1098 ou 1010 de la société Ciba-BASF), un antioxydant de type phosphite (par exemple l'irgafos^{®} 126 de la société Ciba-BASF) et voire éventuellement d'autres stabilisants comme un HALS, ce qui signifie Hindered Amine Light Stabiliser ou stabilisant lumière de type amine encombrée (par exemple le Tinuvin 770 de la société Ciba-BASF), un anti-UV (par exemple le Tinuvin 312 de la société Ciba), un stabilisant à base de phosphore. On peut également utiliser des antioxydants de type amine tel le Naugard 445 de la société Crompton ou encore des stabilisants polyfonctionnels tel le Nylostab S-EED de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

A titre d'exemple, les plastifiants sont choisis parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.

On ne sortirait pas du cadre de l'invention en utilisant un mélange de plastifiants.

A titre d'exemple, les fibres peuvent être choisies parmi les fibres aramides, les fibres de verre, les fibres de carbone, avantageusement les fibres de verre ou les fibres de carbone.

A titre d'exemple, les charges peuvent être choisies parmi la silice, le graphite, le graphite expansé, le noir de carbone, les billes de verre, le kaolin, la magnésie, les scories, le talc, la wollastonite, les nanocharges (nanotubes de carbone), les pigments, les oxydes métalliques (oxyde de titane), les métaux, avantageusement la wollastonite et le talc, préférentiellement le talc.

Dans un mode de réalisation, la présente invention concerne une composition telle que ci-dessus définie, ladite composition étant dépourvue de PEBA.

Avantageusement, le module de flexion est supérieur à 900 MPa tel que déterminé selon la norme ISO 178 :2010.

Dans un mode de réalisation, la présente invention concerne une composition telle que définie ci-dessus, ladite composition étant caractérisée en ce que ledit polyamide semi-cristallin est compatible avec le dit PA amorphe.

L'expression « ledit polyamide semi-cristallin est compatible avec le dit PA amorphe» signifie que, ledit PA semi-cristallin présentant une Tg1 et ledit PA amorphe présentant une Tg2, le mélange de ces deux PA présentera deux Tg, la position de ces deux Tg dépendra des teneurs en PA semi-cristallin et PA amorphe.

Avantageusement, les deux polyamides doivent être également miscibles entre eux.

Dans ce cas, on observe une seule et unique Tg dont la position est donnée par la formule suivante : Tg_{final} = (α₁/Tg₁ + α₂/Tg₂)⁻¹ dans lequel α₁ et α₂ représentent les pourcentages massiques de chaque PA.

Dans un mode de réalisation, la présente invention concerne une composition telle que définie ci-dessus, ladite composition étant caractérisée en ce que (B) est un modifiant choc et la dite composition est substantiellement dépourvue de transparence.

L'expression « substantiellement dépourvue de transparence » signifie que la composition présente une transparence telle que la transmittance à 560 nm sur plaque de 2 mm d'épaisseur est inférieure à 75% déterminée selon la norme ISO 13468-2:2006.

Dans ce mode de réalisation, le fait d'utiliser un modifiant choc rend de fait la composition dépourvue de transparence.

Dans un mode de réalisation, la présente invention concerne une composition telle que définie ci-dessus, ladite composition étant caractérisée en ce que (B) est un core-shell et la dite composition est transparente.

Le terme « transparent », tel qu'utilisé, signifie que la composition présente une transparence telle que la transmittance à 560 nm sur plaque de 2 mm d'épaisseur est supérieure à 75% déterminée selon la norme ISO 13468-2:2006.

Dans ce mode de réalisation, le fait d'utiliser un core-shell permet soit de conserver la transparence, soit de rendre transparent ladite composition.

Dans un mode de réalisation, la présente invention concerne une composition telle que définie ci-dessus, ladite composition étant caractérisée en ce que (B) est un mélange de modifiant choc et de core-shell et la dite composition est substantiellement dépourvue de transparence.

La proportion en poids de modifiant choc et de core-shell est de 0,1/99,9 à 99,9/0,1.

Avantageusement, le polyamide semi-cristallin dans (A) est présent dans la composition de l'invention en proportion de 40 à 70%, en particulier de 50 à 65% et le polyamide amorphe est respectivement présent de 30 à 60%, en particulier de 35 à 50%.

Avantageusement, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est telle que définie ci-dessus et Cb est un diacide aliphatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Ce polyamide amorphe peut être un homopolyamide ou un copolyamide.

Par exemple, la diamine en Ca est choisie parmi la décanediamine (a=10), la dodécanediamine (a=12), PACM et MACM et/ou le diacide en Cb est choisi parmi l'acide sébacique (b=10), l'acide dodécanedioïque (b=12), l'acide tetradécanedioïque (b=14) et l'acide octadécanoïque (b=18).

De préférence, le polyamide amorphe (ou lorsque la composition comprend un mélange de polyamides amorphes, au moins l'un des polyamides amorphes, voire même chacun des polyamides amorphes), lorsqu'il est un homopolyamide, est le PA MACM.10, le PA PACM.10, le PA MACM.12, le PA PACM.12, le PA MACM.14, le PA PACM.14, le PA MACM.18, le PA PACM.18 et, lorsqu'il est un copolyamide, est le PA 11/MACM.10, le PA 11/PACM.10, le PA 11/MACM.12, le PA 11/PACM.12, le PA 11/MACM.14, le PA 11/PACM.14, le PA 11/MACM. 18, le PA 11/PACM. 18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA, 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/5 PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, ou le PA 12/PACM.14/MACM.14.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est cycloaliphatique (notamment telle que définie ci-dessus) et le diacide en Cb est tel que défini ci-dessus, le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est PACM ou MACM et/ou le diacide en Cb est choisi parmi l'acide sébacique (b=10), l'acide dodécanedioïque (b=12), l'acide tetradécanedioïque (b=14) et l'acide octadécanoïque (b=18). Ce polyamide amorphe (ou lorsque la composition comprend un mélange de polyamides amorphes, au moins l'un des polyamides amorphes, voire même chacun des polyamides amorphes) peut être un homopolyamide ou un copolyamide. De préférence, le polyamide amorphe (ou lorsque la composition comprend un mélange de polyamides amorphes, au moins l'un des polyamides amorphes, voire même chacun des polyamides amorphes) est

De préférence, le polyamide amorphe (ou lorsque la composition comprend un mélange de polyamides amorphes, au moins l'un des polyamides amorphes, voire même chacun des polyamides amorphes), lorsqu'il est un homopolyamide est le PA MACM.10, le PA PACM.10, le PA MACM.12, le PA PACM.12, le PA MACM.14, le PA PACM.14, le PA MACM.18, le PA PACM.18, et lorsqu'il est un copolyamide, est le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/5 PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 10 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, le PA 12/PACM.14/MACM.14.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motifrépondant à la formule (diamine en Ca).(diacide en Cb) où la diamine en Ca est cycloaliphatique (notamment telle que définie ci-dessus) et le diacide en Cb est un diacide aromatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est PACM ou MACM et/ou le diacide en Cb est l'acide téréphtalique ou l'acide isophtalique. Ce polyamide amorphe peut être un homopolyamide ou un copolyamide. De préférence, le polyamide amorphe (ou lorsque la composition comprend un mélange de polyamides amorphes, au moins l'un des polyamides amorphes, voire même chacun des polyamides amorphes) est le PA MACM.I, le PA PACM.I, le PA MACM.I/MACM.T, le PA PACM.I/PACM.T, le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, le PA 11/PACM.I/PACM.T, le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PA PACM.I/PACM.T, le 12.10/MACM.I, le 12.10/PA PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T ou le 10.14/PACM.I/PACM.T.

Avantageusement, le polyamide semi-cristallin de la composition ci-dessus définie est un polyamide aliphatique, en particulier choisi parmi PA11, PA12, PA1010, PA1012, notamment PA11.

Dans un mode de réalisation, la présente invention concerne une composition telle que ci-dessus définie, dans laquelle le polyamide amorphe est un polyamide de formule B/X₁Y₁ dans laquelle :
- B est un motif répétitif aliphatique choisi parmi un motif obtenu à partir de la polycondensation d'au moins un aminoacide, un motif obtenu à partir de la polycondensation d'au moins un lactame et un motif obtenu à partir de la polycondensation d'au moins une diamine aliphatique et d'au moins un diacide aliphatique,
- X₁ est une diamine cycloaliphatique, et
- Y₁ est un diacide carboxylique, ledit diacide étant choisi parmi un diacide aliphatique, un diacide cycloaliphatique et un diacide aromatique,
ladite diamine et ledit diacide comprenant de 4 à 36 atomes de carbone, avantageusement de 6 à 18 atomes de carbone.

Les différents constituants B, X₁ et X₂ du polyamide de formule B/X₁Y₁ ci-dessus ont les mêmes définitions que respectivement pour le motif A, X et Y de la composition ci-dessus.

Avantageusement, le polyamide de formule B/X₁Y₁ est tel que défini ci-dessus lorsque ce dernier correspond à un copolyamide.

Avantageusement, la présente invention concerne une composition telle que ci-dessus définie, dans laquelle le polyamide amorphe est choisi parmi 11/B10, 12/B10, 11/BI/BT, 11/BI, notamment 11/B10.

Avantageusement, la présente invention concerne une composition telle que ci-dessus définie, dans laquelle le polyamide aliphatique est PA11 et le polyamide amorphe est 11/B10.

Avantageusement, la présente invention concerne une composition telle que ci-dessus définie, dans laquelle le modifiant choc est choisi parmi une polyoléfine ou un mélange de plusieurs polyoléfines, en particulier la polyoléfine ou le mélange de polyoléfines porte une fonction choisie parmi les fonctions anhydride maléique, acide carboxylique, anhydride carboxylique et époxyde, et est en particulier choisie parmi les copolymères éthylène/octène, les copolymères éthylène/butène, les élastomère éthylène/propylène (EPR), les copolymères éthylène-propylène-diène à caractère élastomère (EPDM) et les copolymères éthylène/(meth)acrylate d'alkyle.

Dans un mode de réalisation avantageux, la présente invention concerne une composition telle que ci-dessus définie, dans laquelle Z =0.

Dans un mode de réalisation avantageux, la présente invention concerne une composition telle que ci-dessus définie, dans laquelle (B) est un modifiant choc en proportion de plus de 10 à 20%, en particulier de 11 à 20%.

Dans un mode de réalisation avantageux, la présente invention concerne une composition telle que ci-dessus définie, dans laquelle Z =0 et (B) est un modifiant choc en proportion de plus de 10 à 20%, en particulier de 11 à 20%.

Dans un mode de réalisation, la présente invention concerne une composition telle que ci-dessus définie, dans laquelle le polyamide amorphe est un polyamide de formule B/X₁Y₁ dans laquelle :
- B est un motif répétitif aliphatique choisi parmi un motif obtenu à partir de la polycondensation d'au moins un aminoacide, un motif obtenu à partir de la polycondensation d'au moins un lactame et un motif obtenu à partir de la polycondensation d'au moins une diamine aliphatique et d'au moins un diacide aliphatique,
- X₁ est une diamine cycloaliphatique, et
- Y₁ est un diacide carboxylique, ledit diacide étant choisi parmi un diacide aliphatique, un diacide cycloaliphatique et un diacide aromatique,
ladite diamine et ledit diacide comprenant de 4 à 36 atomes de carbone, avantageusement de 6 à 18 atomes de carbone, ledit polyamide de formule B/X₁Y₁ étant tel que défini ci-dessus lorsque ce dernier correspond à un copolyamide, ledit polyamide semi-cristallin étant un polyamide aliphatique, en particulier choisi parmi PA11, PA12, PA1010, PA1012, notamment PA11, Z étant égal à 0, ledit constituant (B) de la composition étant un modifiant choc, notamment en proportion de plus de 10% à 20%, en particulier de 11 à 20%, et la dite composition étant dépourvue de transparence.

Dans un mode de réalisation avantageux, la présente invention concerne une composition telle que ci-dessus définie, dans laquelle Z est égal à 0 ledit constituant (B) de la composition étant un modifiant choc, notamment en proportion de plus de 10% à 20%, en particulier de 11 à 20%, ladite composition comprenant :
(A) 75 à 90%,
(B) plus de 10 à 20%, en particulier de 11 à 20%,
(C) 0,1 à 5%,
la somme A + B + C étant égale à 100%.

Dans un mode de réalisation avantageux, la présente invention concerne une composition telle que ci-dessus définie, dans laquelle le polyamide semi-cristallin et/ou le polyamide amorphe est(sont) partiellement ou totalement bio ressourcé(s).

Le terme "bioressourcé" s'entendant au sens de la norme ASTM D6852-02 et, plus préférentiellement, au sens de la norme ASTM D6866.

La norme ASTM D6852 indique la part de produits d'origine naturelle dans la composition tandis que la norme ASTM D6866 vient préciser la méthode et les conditions de mesure du carbone organique renouvelable, c'est-à-dire issu de la biomasse.

Selon un autre aspect, la présente invention concerne l'utilisation d'une composition telle que ci-dessus définie, pour la fabrication d'articles obtenus par extrusion, injection, moulage ou thermoformage.

Toutes les caractéristiques techniques détaillées ci-dessus pour la composition en tant que telle sont valables pour son utilisation.

Dans un mode de réalisation avantageux, la présente invention concerne l'utilisation d'une composition telle que ci-dessus définie, pour la fabrication d'articles obtenus par injection, choisis parmi un article de sport, notamment une chaussure de ski ou une partie de chaussure de ski ou une chaussure rigide à crampon, telle que chaussure de soccer, de rugby ou de football américain, une chaussure de hockey ou une partie de chaussure de hockey, ou une chaussure de running, une balle de golf ou une partie de balle de golf, ou une crosse dans le sport lacrosse, un article de hockey tel qu'un casque.... et des articles de sport pour la protection de la tête, des épaules, des coudes, des mains, des genoux, du dos ou du tibia, tels que casque, gants, épaulettes, coudières, genouillères ou protèges tibia.

Dans un mode de réalisation avantageux, la présente invention concerne l'utilisation d'une composition telle que ci-dessus définie, pour la fabrication d'articles obtenus par injection qui sont des articles d'optique, en particulier des lunettes ou un masque, notamment des lunettes ou un masque utilisées dans la pratique d'un sport telles que des lunettes de protection ou un masque de ski.

Dans un mode de réalisation avantageux, la présente invention concerne l'utilisation d'une composition telle que ci-dessus définie, pour la fabrication d'articles obtenus par extrusion tels que des films.

Dans un mode de réalisation avantageux, la présente invention concerne l'utilisation d'une composition telle que ci-dessus définie, pour thermoformer un article, notamment une partie de chaussure de ski ou de roller ou de chaussure de hockey, notamment de chaussure de ski, ou des lunettes ou un masque, notamment des lunettes ou un masque de sport, en particulier des lunettes de protection ou un masque de ski.

Selon un autre aspect, la présente invention concerne un procédé de préparation d'une composition telle que définie ci-dessus, comprenant une étape de mélange des constituants (A), (B) et (C) à l'état fondu, dans une extrudeuse, à une température comprise entre 230 et 330°C, pour obtenir après des granulés, granulés qui seront par la suite injectés à une température comprise entre 230 et 330°C, sur une presse à injection pour obtenir les articles désirés.

Toutes les caractéristiques techniques détaillées ci-dessus pour la composition en tant que telle sont valables pour le procédé.

Selon un autre aspect, la présente invention concerne un article façonné, tel que fibre, tissu, film, feuille, jonc, tube pièce injectée, notamment substantiellement dépourvu de transparence, comprenant la composition telle que définie ci-dessus, laquelle peut être réalisé sous la forme d'un mélange à sec ou après un compoundage sur extrudeuse.

Toutes les caractéristiques techniques détaillées ci-dessus pour la composition en tant que telle sont valables pour l'article.

Dans un mode de réalisation avantageux, la présente invention concerne un article tel que ci-dessus défini, caractérisé par le fait qu'il consiste en un article de sport, notamment une chaussure de ski ou une partie de chaussure de ski ou une chaussure rigide à crampon, telle que chaussure de soccer, de rugby ou de football américain une chaussure de hockey ou une partie de chaussure de hockey, ou une chaussure de running, une balle de golf ou une partie de balle de golf, ou une crosse dans le sport lacrosse ou encore un article de hockey tel qu'un casque ou des articles de sport pour la protection de la tête, des épaules, des coudes, des mains, des genoux, du dos ou du tibia, tels que casque, gants, épaulettes, coudières, genouillères ou protèges tibia.

Dans un mode de réalisation avantageux, la présente invention concerne un article tel que ci-dessus défini, caractérisé par le fait qu'il consiste en un article d'optique, en particulier des lunettes ou un masque, notamment des lunettes ou un masque utilisées dans la pratique d'un sport telles que des lunettes de protection ou un masque de ski.

### Description des figures

La figure 1 présente la transition ductile-fragile (T_{DF}) de la composition de l'invention (invention 1) (barreaux entaillés et conditionnés).
   Axe des abscisses : température en °C
   Axe des ordonnées : Résilience (Kj/m²)
La figure 2 présente la transition ductile-fragile (T_{DF}) de la composition de l'invention (invention 2) (barreaux entaillés et conditionnés).
   Axe des abscisses : température en °C
   Axe des ordonnées : Résilience (Kj/m²)
La figure 3 présente la transition ductile-fragile (T_{DF}) de la composition comparative 1.
   Axe des abscisses : température en °C
   Axe des ordonnées : Résilience (Kj/m²)
La figure 4 présente les essais de thermoformage de la composition de l'invention (invention 1) et de la composition comparative (comparatif 1) de l'exemple 5.
   Axe des ordonnées : Partie formée (en %)
   Axe des abscisses : Température
   La courbe reliant les températures de 110°c à 145°C correspond à l'invention (invention 1).
   La courbe reliant les températures de 115°c à 135°C correspond au comparatif (comparatif 1).
La figure 5 présente l'aptitude à la mise en forme de la composition de l'invention (invention 1). Cette aptitude a été évaluée par DMA (Dynamical Mechanical Analysis) à 5% de déformation.
   Axe des ordonnées gauche : Déformation (%)
   Axe des ordonnées droit température (°C)
   Axe des abscisses : temps (minutes)
La figure 6 présente l'aptitude à la mise en forme de la composition de l'invention (invention 1). Cette aptitude a été évaluée par DMA (Dynamical Mechanical Analysis) à 10% de déformation.
   Axe des ordonnées gauche : Déformation (%)
   Axe des ordonnées droit température (°C)
   Axe des abscisses : temps (minutes)

### Exemples :

### Exemple 1 : Mélanges 11/B10 et PA11

Composition de l'invention (voir tableau I) :
Les proportions sont indiquées en poids.

| Constituants | C 1 | C 2 | C 3 | I 1 | I 2 | I 3 | I 4 | I 5 | I 6 | I 7 |
|---|---|---|---|---|---|---|---|---|---|---|
| 11/B10 (0,25/1 molaire) | - | 43 | 17,5 | 39,80 | 39,80 | 26 | 30 | 42,5 | 54,5 | 38 |
| Fusabond^{®} 493 | - | - | - | - | 12 | - | - | - | - | - |
| Irgafos^{®} 126 | 0,2 | - | - | 0,2 | 0,2 | - | - | - | - | - |
| Irganox^{®} 245 | 0,1 | - | - | 0,1 | 0,1 | - | - | - | - | - |
| PA11 | 84,7 | 53 | 82,5 | 47,90 | 47,90 | 60 | 57 | 42,5 | 38 | 54,5 |
| Tafmer MH5020 | - | 4 | 2 | 12 | - | 14 | 13 | 15 | 7,5 | 7,5 |
| PEBAX (50% PA11 (1000) + 50% PTMG (1000)) | 15 | - | - | - | - | - | - | - | - | - |

| | | | | | | | | | | |
|---|---|---|---|---|---|---|---|---|---|---|
| C = Comparatif I = Invention | | | | | | | | | | |

Le Fusabond^{®} 493 est une polyoléfine de type élastomère (éthylène-octène maléisé) commercialisée par DuPont.

L'irgafos^{®} 126 est un antioxydant à base de phosphite commercialisé par Ciba-BASF.

L'irganox^{®} 245 est un antioxydant de type phénol commercialisé par Ciba-BASF.

Le Tafmer MH5020 est une polyoléfine fonctionnalisée commercialisée par Mitsui Chemicals

Le module de flexion selon ISO 178 :2010 (après conditionnement 15j à 23°C, humidité relative 50%) a été déterminé et est présenté tableau II :

**TABLEAU II**

| Constituants | C 1 | C 2 | C 3 | I 1 | I 2 | I 3 | I 4 | I 5 | I 6 | I 7 |
|---|---|---|---|---|---|---|---|---|---|---|
| Module de flexion ISO 178 :2010 (MPa) | 850 | - | - | 1090 | 1110 | 920 | 990 | 1050 | 1300 | 1200 |
| T_{DF} (°C) | 17 | 30 | 30 | < -20 | -10 à -20 | -30 | -27,5 | -32,5 | -7,5 | -5 |

### Exemple 2 : Transition ductile-fragile

La transition ductile fragile a été déterminée selon la norme ISO 179 1eA.

La T_{DF} de la composition de l'invention (I 1 : invention 1) est inférieure à -20°C (comportement ductile pour T ≥ -20°C).

La T_{DF} de la composition de l'invention (I 2 invention 2) est comprise entre - 10°C et -20°C.

La T_{DF} de la composition C 1 : comparative 1 est environ égale à 15-20°C.

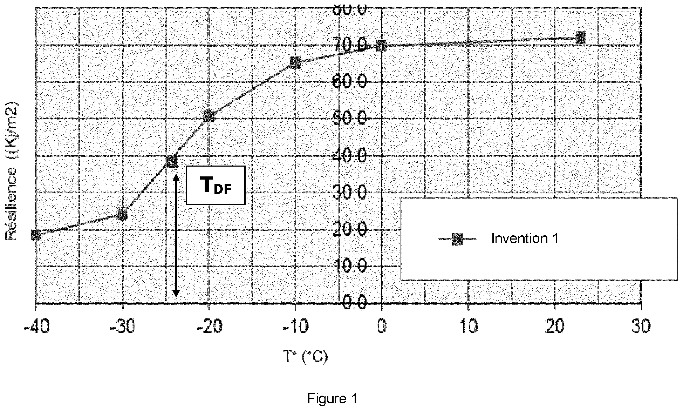

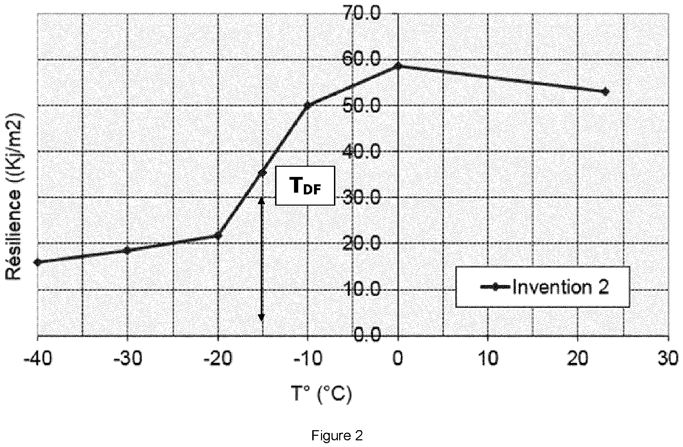

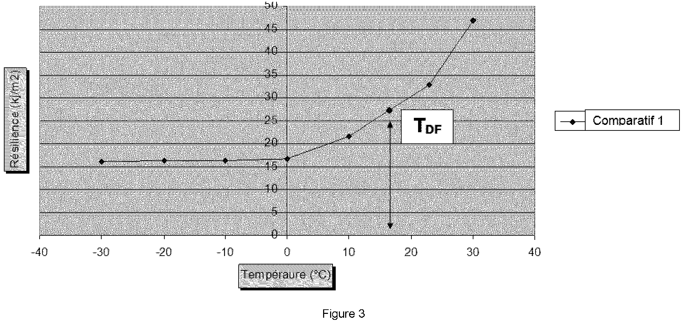

Voir figures 1 à 3 et tableau II.

### Exemple 3 : Sensibilité à l'entaille (flexion trois points avec entaille fine)

La sensibilité à l'entaille a été évaluée à -10, -20 et -30°C à une vitesse de 2000 mm / min via un essai de flexion trois points sur barreaux entaillés (méthode interne ARKEMA après conditionnement 15j à 23°C, avec une humidité relative de 50%).

Les compositions de l'invention I 1 (invention 1), I 3 (invention 3) et I 4 (invention 4) présentent un comportement ductile à -30°C à une vitesse de 2000mm/min.

La composition de l'invention I 2 (invention 2) présente un comportement ductile à -20°C à une vitesse de 2000mm/min.

La composition comparative C 1(comparatif 1) est fragile à -20°C à une vitesse de 2000mm/min.

### Exemple 4 : Ross Flex avec et sans entaille en V :

Nombre de cycles : 250 000
Température : -10°C
Fréquence de flexion : 100 cycles / min
Angle de Flexion: 60°
Conditionnement des éprouvettes : 7 jours à 70°C
Entaille: sur 1 seul côté (en V, profondeur 1mm, rayon de fond d'entaille 0.25mm).
Après 250000 cycles avec entaille, les formulations de l'invention I 1 (invention 1), I 3 (invention 3) et I 4 (invention 4) présentent des zones fissurées partant de l'entaille. Néanmoins le barreau n'est pas cassé.
Après 250000 cycles sans entaille, les formulations de l'invention I 1 (invention 1), I 3 (invention 3) et I 4 (invention 4) n'ont ni cassé, ni fissuré.

### Exemple 5 : Thermoformage

Les essais de thermoformage ont été réalisés avec la composition de l'invention I 1 (invention 1) sur des plaques extrudées de 2mm d'épaisseur avec un moule de type pot de yaourt. La profondeur a été réglée sur 3 cm. Il a été fait varier la température de la feuille avant le cycle de formage.

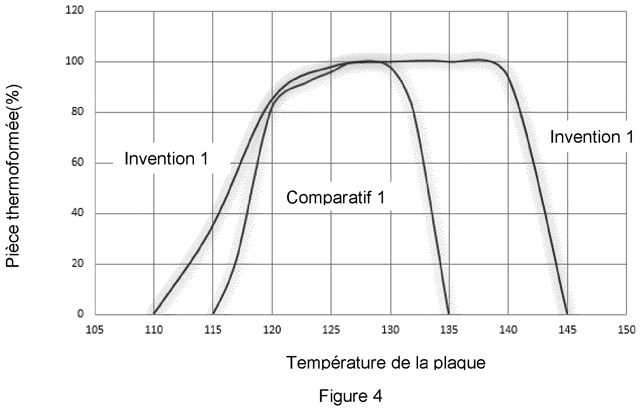

Les résultats sont présentés figure 4.

La fenêtre de processabilité est plus large pour la composition de l'invention.
∘ Composition comparative : 8°C
∘ Composition de l'invention : 15°C.

L'aptitude à la mise en forme de la composition de l'invention a également été évaluée par DMA (Dynamical Mechanical analysis).
Appareil : DMA Q800-2
Outil : Tension sur barreaux de 2mm de large et 0.5mm d'épaisseur.
Protocole de test :
   - Lancement de l'essai à 23°C avec une légère déformation de 0.1%.
   - On réalise une montée en température rapide.
   - A T= 90°C, une déformation est appliquée (5 ou 10%).
   - Isotherme de 5 min (toujours à une déformation de 5 ou 10%).
   - Refroidissement de 5°C/min jusqu'à 23°C en maintenant la déformation à 5 ou 10%.
   - A 23°C, la contrainte est relâchée.
   - On mesure la déformation résiduelle.

Plus celle-ci reste élevée, plus l'aptitude du matériau à être mis en forme est importante.

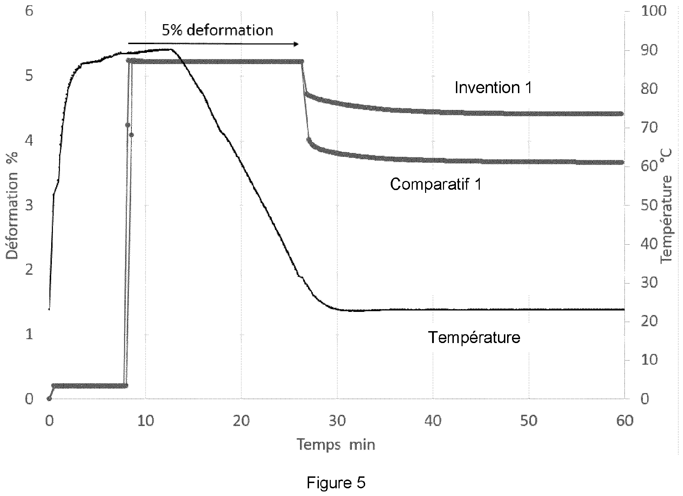

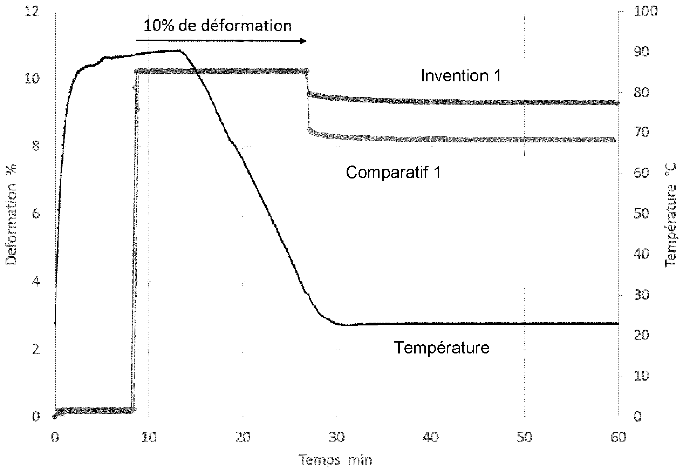

Les résultats sont présentés sur la figure 5 et la figure 6.

## Revendications

1. Composition comprenant, en poids, le total étant égal à100 % :
(A) 65 à 95% d'un mélange de polyamide comprenant de:
• 10 à 90% en poids d'au moins un polyamide semi-cristallin dont le nombre moyen d'atomes de carbone par rapport à l'atome d'azote est supérieur à 9, ledit polyamide semi-cristallin étant de formule A/Z dans laquelle,
- A est un motif répétitif aliphatique choisi parmi un motif obtenu à partir de la polycondensation d'au moins un aminoacide, un motif obtenu à partir de la polycondensation d'au moins un lactame et un motif X.Y obtenu à partir de la polycondensation :
- d'au moins une diamine, ladite diamine étant une diamine aliphatique linéaire ou ramifiée, ou un mélange de celles-ci, et
- d'au moins un diacide carboxylique, ledit diacide étant un diacide aliphatique linéaire ou ramifié,
ladite diamine et ledit diacide comprenant de 4 à 36 atomes de carbone, avantageusement de 6 à 18 atomes de carbone, et
- Z représente un autre motif répétitif aliphatique motif répétitif aliphatique ou XY différent de A et est compris de 0 à 20%;
• 90 à 10% en poids d'au moins un polyamide amorphe,
(B) 7 à 30%, en particulier de plus de 10 à 30% d'au moins un modifiant choc ou d'au moins un coeur-écorce (core-shell) ou d'un mélange de ceux-ci
(C) 0 à 5%, en particulier de 0,1 à 5%, d'au moins un additif choisi parmi les stabilisants, les colorants, les plastifiants, les fibres, les charges, les adjuvants aidant à la transformation (processing aids) ou un mélange de ceux-ci,
ledit polyamide amorphe étant en proportion suffisante pour que la composition soit suffisamment ductile à basse température, et rigide, et présente notamment une T_{DF} < 0°C telle que déterminée selon la norme ISO 179 1eA et un module de flexion supérieur à 900 MPa tel que déterminé selon la norme ISO 178 :2010, et ladite composition étant dépourvue de PEBA.

2. Composition selon la revendication 1, **caractérisée en ce que** ledit PA semi-cristallin est compatible avec ledit PA amorphe.

3. Composition selon l'une des revendications 1 ou 2, **caractérisée en ce que** (B) est un modifiant choc et ladite composition est substantiellement dépourvue de transparence.

4. Composition selon l'une des revendications 1 ou 2, **caractérisée en ce que** (B) est un coeur-écorce (core-shell) et ladite composition est transparente.

5. Composition selon l'une des revendications 1 à 4, dans laquelle le polyamide semi-cristallin dans (A) est présent de 40 à 70%, en particulier de 50 à 65% et le polyamide amorphe est respectivement présent de 30 à 60%, en particulier de 35 à 50%.

6. Composition selon l'une des revendications 1 à 5, dans laquelle le polyamide semi-cristallin est un polyamide semi-cristallin aliphatique.

7. Composition selon la revendication 6, dans laquelle le polyamide semi-cristallin aliphatique est choisi parmi PA11, PA12, PA1010, PA1012, en particulier PA11.

8. Composition selon l'une des revendications 1 à 7, dans laquelle le polyamide amorphe est un polyamide de formule B/X₁Y₁ dans laquelle :
- B est un motif répétitif aliphatique choisi parmi un motif obtenu à partir de la polycondensation d'au moins un aminoacide, un motif obtenu à partir de la polycondensation d'au moins un lactame et un motif obtenu à partir de la polycondensation d'au moins une diamine aliphatique et d'au moins un diacide aliphatique,
- X₁ est une diamine cycloaliphatique, et
- Y₁ est un diacide carboxylique, ledit diacide étant choisi parmi un diacide aliphatique, un diacide cycloaliphatique et un diacide aromatique,
ladite diamine et ledit diacide comprenant de 4 à 36 atomes de carbone, avantageusement de 6 à 18 atomes de carbone.

9. Composition selon la revendication 8, dans laquelle le polyamide amorphe est choisi parmi 11/B10, 12/B10, 11/BI/BT, 11/BI, notamment 11/B10.

10. Composition selon l'une des revendications 1 à 9, dans laquelle le polyamide semi-cristallin aliphatique est PA11 et le polyamide amorphe est 11/B10.

11. Composition selon l'une des revendications 1 à 10, dans laquelle le modifiant choc est choisi parmi une polyoléfine ou un mélange de plusieurs polyoléfines.

12. Composition selon la revendication 11, dans laquelle la polyoléfine ou le mélange de polyoléfines porte une fonction choisie parmi les fonctions anhydride maléique, acide carboxylique, anhydride carboxylique et époxyde, et est en particulier choisie parmi les copolymères éthylène/octène, les copolymères éthylène/butène, les élastomère éthylène/propylène (EPR), les copolymères éthylène-propylène-diène à caractère élastomère (EPDM) et les copolymères éthylène/(meth)acrylate d'alkyle.

13. Composition selon l'une des revendications 1 à 12, dans laquelle Z = 0.

14. Composition selon la revendication 13, dans laquelle (B) est un modifiant choc en proportion de plus de 10 à 20%, en particulier de 11 à 20%.

15. Composition selon la revendication 13 ou 14, comprenant:
(A) 75 à 90%,
(B) plus de 10 à 20%, en particulier de 11 à 20%,
(C) 0,1 à 5%,
la somme A + B + C étant égale à 100%.

16. Composition selon la revendication 15, **caractérisée en ce que** le polyamide semi-cristallin et/ou le polyamide amorphe est(sont) partiellement ou totalement bio ressourcé(s).

17. Utilisation d'une composition telle que définie dans l'une des revendications 1 à 16, pour la fabrication d'articles obtenus par extrusion, injection, moulage ou thermoformage.

18. Utilisation d'une composition selon la revendication 17, pour la fabrication d'articles obtenus par injection, choisi parmi un article de sport, notamment une chaussure de ski ou une partie de chaussure de ski ou une chaussure rigide à crampon, telle que chaussure de soccer, de rugby ou de football américain une chaussure de hockey ou une partie de chaussure de hockey, ou une chaussure de running, une balle de golf ou une partie de balle de golf, ou une crosse dans le sport lacrosse, un article de hockey tel qu'un casque et des articles de sport pour la protection de la tête, des épaules, des coudes, des mains, des genoux, du dos ou du tibia, tels que casque, gants, épaulettes, coudières, genouillères ou protèges tibia.

19. Utilisation d'une composition selon la revendication 17, pour la fabrication d'articles obtenus par injection qui sont des articles d'optique, en particulier des lunettes ou un masque, notamment des lunettes ou un masque utilisées dans la pratique d'un sport telles que des lunettes de protection ou un masque de ski.

20. Utilisation d'une composition selon la revendication 17, pour la fabrication d'articles obtenus par extrusion tels que des films.

21. Utilisation d'une composition telle que définie dans l'une des revendications 1 à 16, pour thermoformer un article, notamment une partie de chaussure de ski ou de roller ou de chaussure de hockey, notamment de chaussure de ski, ou des lunettes ou un masque, notamment des lunettes ou un masque de sport, en particulier des lunettes de protection ou un masque de ski.

22. Procédé de préparation d'une composition telle que définie à l'une des revendications 1 à 16, comprenant une étape de mélange des constituants (A), (B) et (C) à l'état fondu, dans une extrudeuse, à une température comprise entre 230 et 330°C, pour obtenir après des granulés, granulés qui seront par la suite injectés à une température comprise entre 230 et 330°C, sur une presse à injection pour obtenir les articles désirés.

23. Article façonné, tel que fibre, tissu, film, feuille, jonc, tube pièce injectée, notamment substantiellement dépourvu de transparence, comprenant la composition telle que définie à l'une des revendications 1 à 16, laquelle peut être réalisé sous la forme d'un mélange à sec ou après un compoundage sur extrudeuse.

24. Article selon la revendication 23, **caractérisé par le fait qu'**il consiste en un article de sport, notamment une chaussure de ski ou une partie de chaussure de ski ou une chaussure rigide à crampon, telle que chaussure de soccer, de rugby ou de football américain une chaussure de hockey ou une partie de chaussure de hockey, ou une chaussure de running, une balle de golf ou une partie de balle de golf, ou une crosse dans le sport lacrosse ou encore un article de hockey tel qu'un casque ou des articles de sport pour la protection de la tête, des épaules, des coudes, des mains, des genoux, du dos ou du tibia, tels que casque, gants, épaulettes, coudières, genouillères ou protèges tibia.

25. Article selon la revendication 23, **caractérisé par le fait qu'**il consiste en un article d'optique, en particulier des lunettes ou un masque, notamment des lunettes ou un masque utilisées dans la pratique d'un sport telles que des lunettes de protection ou un masque de ski.
